(19) Europäisches Patentamt
European Patent Office
Office européen des brevets

(11) **EP 1 733 925 B1**

(12) **EUROPÄISCHE PATENTSCHRIFT**

(45) Veröffentlichungstag und Bekanntmachung des Hinweises auf die Patenterteilung:
**15.06.2011  Patentblatt 2011/24**

(51) Int Cl.:
***B60R 16/02*** *(2006.01)*　　***H02J 1/00*** *(2006.01)*

(21) Anmeldenummer: **06113182.7**

(22) Anmeldetag: **27.04.2006**

(54) **Verfahren zum Versorgen von elektrischen Verbrauchern mit elektrischer Energie und Versorgungsvorrichtung zur Durchführung des Verfahrens**

Method for supplying electrical consumers with electric energy and alimentation device to perform such method

Méthode d'alimentation des consommateurs électriques avec de l'énergie électrique et dispositif d'alimentation pour effectuer cette méthode

(84) Benannte Vertragsstaaten:
**DE ES FR GB IT**

(30) Priorität: **13.06.2005  DE 102005027164**

(43) Veröffentlichungstag der Anmeldung:
**20.12.2006  Patentblatt 2006/51**

(73) Patentinhaber: **ROBERT BOSCH GMBH**
**70442 Stuttgart (DE)**

(72) Erfinder: **Hoenes, Frank**
**71254 Ditzingen (DE)**

(56) Entgegenhaltungen:
US-A- 5 814 972　　US-A- 6 166 934
US-A1- 2002 196 001　　US-A1- 2006 145 538
US-B1- 6 455 949

EP 1 733 925 B1

**Beschreibung**

Die vorliegende Erfindung betrifft allgemein elektrische Energieversorgungsvorrichtungen zum Zuführen elektrischer Energie zu Schaltungseinheiten, die mit einer variierbaren oder einer festen Betriebsspannung und einem vorgegebenen Betriebsstrom betrieben werden. Insbesondere betrifft die vorliegende Erfindung eine Energieversorgungsvorrichtung und ein Energieversorgungsverfahren, bei welchen eine Betriebsspannung, die den zu versorgenden Schaltungseinheiten zugeführt wird, hinsichtlich einer in einem Steuergerät entstehenden Verlustleistung optimiert ist.

Spezifisch betrifft die vorliegende Erfindung eine Vorrichtung zur Versorgung mindestens einer zu versorgenden Schaltungseinheit mit elektrischer Energie, indem der mindestens einen zu versorgenden Schaltungseinheit eine Betriebsspannung und ein Betriebsstrom bereitgestellt werden, wobei die Versorgungsvorrichtung eine Steuereinheit zur Ansteuerung der mindestens einen zu versorgenden Schaltungseinheit, eine Energieversorgungseinheit zur Versorgung der Steuereinheit mit elektrischer Energie, indem der Steuereinheit eine Energieversorgungsspannung und ein Energieversorgungsstrom bereitgestellt werden, und mindestens eine elektrische Verbindungseinheit zur elektrischen Verbindung der mindestens einen zu versorgenden Schaltungseinheit mit der Steuereinheit aufweist.

Aus US 2003/0030324 A1 ist eine Leistungsverteilungs-Vorrichtung bekannt, bei der in Abhängigkeit von einer Strom-Anforderung ein erster bzw. ein erster und ein zweiter Spannungswandler betrieben werden. Über diese Schaltung wird eine definierte Versorgungsspannung von 7 Volt für nachgeschaltete elektrische Einheiten auch bei einem höheren Strombedarf sichergestellt.

STAND DER TECHNIK

Insbesondere bei der Kraftfahrzeugelektronik werden Sensoren als zu versorgende elektrische Schaltungseinheiten eingesetzt, welche über ein Steuergerät bzw. eine Steuereinheit angesteuert werden. Hierbei ist es möglich, dass die zu versorgende Schaltungseinheit bzw. die Sensoreinheit getrennt von dem Steuergerät mit elektrischer Energie und somit unabhängig von der Steuereinheit versorgt wird (Fall (a)).

Ferner ist es möglich, dass die zu versorgende Schaltungseinheit bzw. die Sensoreinheit direkt über die Steuereinheit (das Steuergerät) mit elektrischer Energie versorgt wird (Fall (b)).

Die vorliegende Erfindung bezieht sich auf den obigen Fall (b). Hierbei wird einer Sensoreinheit als der zu versorgenden Schaltungseinheit von der Steuereinheit üblicherweise eine geregelte Betriebsspannung bereitgestellt, die aus einer Energieversorgungseinheit der Steuereinheit mittels einer Hilfsschaltung bzw. mittels eines Spannungsreglers erhalten wird. Die Energieversorgungseinheit, welche die Steuereinheit mit elektrischer Energie versorgt, kann als ein Netzgerät, eine Fahrzeugbatterie oder als eine sonstige Energiequelle, wie beispielsweise ein Solargenerator, ausgebildet sein. In nachteiliger Weise kann eine Energieversorgungsspannung, die von einer derartigen Energieversorgungseinheit bereitgestellt wird, in weiten Bereichen variieren. Hieraus folgt das Problem, dass bei einer konstanten Betriebsspannung der zu versorgenden elektrischen Schaltungseinheit eine Differenzspannung, d.h. eine Differenz zwischen der Energieversorgungsspannung, die von der Energieversorgungseinheit geliefert wird, und der Betriebsspannung eine Verlustleistung definiert wird, die sich bei gegebenem Betriebsstrom der zu versorgenden Schaltungseinheit aus dem Produkt der Differenzspannung und dem Betriebsstrom ergibt.

Variiert nun die Energieversorgungsspannung der Energieversorgungseinheit, hat dies in unzweckmäßiger Weise zur Folge, dass die in der Steuereinheit umgesetzte Verlustleistung variiert. Besonders nachteilig ist es, wenn die Energieversorgungsspannung aus bestimmten Gründen, beispielsweise durch einen Aufladeprozess einer Fahrzeugbatterie, erhöht ist, derart, dass die Spannungsdifferenz erhöht ist, da dann auch die in der Steuereinheit umgesetzte Verlustleistung erhöht wird.

Aus Kostengründen werden Steuereinheiten in der Fahrzeugelektronik in Kunststoffgehäusen angeordnet, wobei die derartigen Kunststoffgehäuse einen hohen thermischen Widerstand aufweisen, welcher nur eine begrenzte Abführung von Verlustwärme, die durch die Verlustleistung hervorgerufen wird, in die Umgebung ermöglicht. Dem Fachmann ist bekannt, dass sich eine Innentemperatur einer Steuereinheit aus den Größen Außentemperatur, Verlustleistung und thermischer Widerstand des Gehäuses errechnen lässt. Es sei hier nur darauf hingewiesen, dass die Innentemperatur proportional zu dem Produkt von Außentemperatur und Verlustleistung ansteigt und umgekehrt proportional zu dem thermischen Widerstand des Gehäuses abnimmt.

Ferner ist es Fachleuten bekannt, dass im Hinblick auf eine Lebensdauer der Elektronik der Steuereinheit üblicherweise angenommen wird, dass eine um 3°C verringerte Innentemperatur der Steuereinheit eine Verlängerung der Lebensdauer der Elektronik der Steuereinheit typischerweise um den Faktor 2 bedeutet.

Die durch eine hohe Verlustleistung in der Steuereinheit für zu versorgende Schaltungseinheiten hervorgerufenen Probleme sind im Stand der Technik beispielsweise durch eine Bereitstellung eines vergrößerten Gehäuses oder eines variierten Gehäusematerials mit einem geringeren thermischen Widerstand gelöst worden. Beispielsweise können Metallgehäuse mit Lüftungsöffnungen eingesetzt werden. Ein wesentlicher Nachteil einer derartigen Vorgehensweise besteht darin, dass Metallgehäuse hinsichtlich Kosten und Gewicht gegenüber den Kunststoffgehäusen mit höherem thermischen Widerstand unzweckmäßig sind. Ein Gehäuse mit Lüftungsöffnungen, um die durch die Verlustleistung erzeugte Temperaturerhöhung zu begrenzen, weist den Nachteil auf, dass eine Verschmutzung der elektronischen Komponenten der Steuereinheit hervorgerufen wird. Ferner ergeben sich durch Gehäuse mit Lüftungsöffnungen Probleme hinsichtlich einer Ausbildung von Feuchtigkeit bzw. einer Betauung von elektronischen Komponenten. Hierdurch wird die Lebensdauer der Steuereinheit in nachteiliger Weise verringert.

Ferner ist vorgeschlagen worden, einen Schaltregler einzusetzen, welcher als ein Tiefsetzsteller grundsätzlich geringere Verluste erzeugt als ein analoger Regler. In unzweckmäßiger Weise werden hierdurch jedoch die Kosten der gesamten Schaltungsanordnung erhöht. Ferner ist es unzweckmäßig, dass die elektromagnetische Verträglichkeit (EMV) nicht gegeben ist, bzw. dass erhebliche EMV-Schutzmaßnahmen erforderlich sind.

Im Hinblick auf einen Einsatz zu versorgender Schaltungseinheiten, insbesondere mit Energieversorgung der Sensoreinheiten, ist in dem Stand der Technik versucht worden, die zu versorgenden Schaltungseinheiten direkt von dem Fahrzeug-Bordnetz zu versorgen. Hierdurch ergibt sich der Nachteil, dass der gesamte ESD/EMV-Schutz in jedem einzelnen Sensor erforderlich ist. Sämtliche Störungen bzw. Rückwirkungen des Fahrzeug-Bordnetzes vom bzw. in den Sensor sind hierbei schaltungstechnisch zu berücksichtigen. Dies führt in unzweckmäßiger Weise zu einem erhöhten Aufwand und damit zu erhöhten Kosten.

VORTEILE DER ERFINDUNG

Es ist daher eine Aufgabe der vorliegenden Erfindung, eine Vorrichtung und ein Verfahren zur Versorgung von zu versorgenden elektrischen Schaltungseinheiten mit elektrischer Energie über eine Steuereinheit anzugeben, wobei eine Verlustleistung, die in der Steuereinheit umgesetzt werden muss, verringert ist.

Diese Aufgabe wird erfindungsgemäß durch eine Vorrichtung mit den Merkmalen des Patentanspruchs 1 gelöst.

Ferner wird die Aufgabe durch ein im Patentanspruch 5 angegebenes Verfahren gelöst.

Weitere Ausgestaltungen der Erfindung ergeben sich aus den Unteransprüchen.

Ein wesentlicher Gedanke der Erfindung besteht darin, eine von der Energieversorgungseinheit für die Steuereinheit bereitgestellte Energieversorgungsspannung zu erfassen bzw. zu überwachen, um die der zu versorgenden Schaltungseinheit bereitgestellte Betriebsspannung mittels einer Umschalteinheit entsprechend anzupassen, derart, dass die Verlustleistung verringert ist. Eine Kernidee der Erfindung besteht darin, eine Erfassungseinheit zur Erfassung der von der Energieversorgungseinheit bereitgestellten Energieversorgungsspannung bereitzustellen, und dann mittels mindestens einer Umschalteinheit eine Betriebsspannung, die einer zu versorgenden Schaltungseinheit zugeführt wird, von einem ersten Betriebsspannungspegel auf mindestens einen zweiten Betriebsspannungspegel in Abhängigkeit von der erfassten Energieversorgungsspannung umzuschalten. Es ist somit ein wesentlicher Vorteil der vorliegenden Erfindung, dass eine Temperaturerhöhung aufgrund einer in der Steuereinheit umgesetzten Verlustleistung dadurch verringert werden kann, dass eine Spannungsdifferenz zwischen der Energieversorgungsspannung, die von der Energieversorgungseinheit geliefert wird, und der Betriebsspannung, die der zu versorgenden Schaltungseinheit bereitgestellt wird, verringert wird.

Gemäß einem allgemeinen Aspekt der vorliegenden Erfindung weist die Vorrichtung zur Versorgung mindestens einer zu versorgenden Schaltungseinheit mit elektrischer Energie, indem der mindestens einen zu versorgenden Schaltungseinheit eine Betriebsspannung und ein Betriebsstrom bereitgestellt werden, im Wesentlichen auf:

a) eine Steuereinheit zur Ansteuerung der mindestens einen zu versorgenden Schaltungseinheit;

b) eine Energieversorgungseinheit zur Versorgung der Steuereinheit mit elektrischer Energie, indem der Steuereinheit eine Energieversorgungsspannung und ein Energieversorgungsstrom bereitgestellt werden; und

c) mindestens eine elektrische Verbindungseinheit zur elektrischen Verbindung der mindestens einen zu versorgenden Schaltungseinheit mit der Steuereinheit, wobei ferner eine Erfassungseinheit zur Erfassung der von der Energieversorgungseinheit bereitgestellten Energieversorgungsspannung und mindestens eine Umschalteinheit zur Umschaltung der mindestens einen Betriebsspannung, die der mindestens einen zu versorgenden Schaltungseinheit bereitgestellt wird, von einem ersten Betriebsspannungspegel auf mindestens einen zweiten Betriebsspannungspegel in Abhängigkeit von der erfassten Energieversorgungsspannung bereitgestellt sind, wobei der 2. Betriebsspannungspegel (204) größer als der erste Betriebsspannungspegel ist, und wobei eine Spannungsdifferenz zwischen der Energieversorgungsspannung und der Betriebsspannung verringert wird.

Ferner weist das erfindungsgemäße Verfahren zum Versorgen mindestens einer zu versorgenden Schaltungseinheit mit elektrischer Energie, indem der mindestens einen zu versorgenden Schaltungseinheit eine Betriebsspannung und ein Betriebsstrom bereitgestellt werden, im Wesentlichen die folgenden Schritte auf:

a) Versorgen einer Steuereinheit mit elektrischer Energie mittels einer Energieversorgungseinheit, indem der Steuereinheit eine Energieversorgungsspannung und ein Energieversorgungsstrom bereitgestellt werden;

b) Ansteuern der mindestens einen zu versorgenden Schaltungseinheit mittels der Steuereinheit, wobei die mindestens eine zu versorgende Schaltungseinheit mit der Steuereinheit über mindestens eine elektrische Verbindungseinheit elektrisch verbunden wird;

c) Erfassen der von der Energieversorgungseinheit bereitgestellten Energieversorgungsspannung mittels einer Erfassungseinheit; und

d) Umschalten der mindestens einen Betriebsspannung, die der mindestens einen zu versorgenden Schaltungseinheit bereitgestellt wird, von einem ersten Betriebsspannungspegel auf mindestens einen zweiten Betriebsspannungspegel in Abhängigkeit von der erfassten Energieversorgungsspannung mittels mindestens einer Umschalteinheit, wobei der 2. Betriebsspannungspegel (204) größer als der erste Betriebsspannungspegel ist, und wobei eine Spannungsdifferenz zwischen der Energieversorgungsspannung und der Betriebsspannung verringert wird.

In den Unteransprüchen finden sich vorteilhafte Weiterbildungen und Verbesserungen des jeweiligen Gegenstandes der Erfindung.

Gemäß einer bevorzugten Weiterbildung der vorliegenden Erfindung ist die mindestens eine zu versorgende Schaltungseinheit als eine Sensoreinheit ausgebildet. Insbesondere in der Fahrzeugelektronik ist es vorteilhaft, derartige Sensoreinheiten mit unterschiedlichen Betriebsspannungen zu beaufschlagen, derart, dass eine Verlustleistung in dem Steuergerät für die Sensoreinheit verringert ist.

Gemäß einer weiteren bevorzugten Weiterbildung der vorliegenden Erfmdung ist die Energieversorgung zur Versorgung der Steuereinheit mit elektrischer Energie, indem der Energieversorgungseinheit eine Energieversorgungsspannung und ein Energieversorgungsstrom bereitgestellt werden, als eine Fahrzeugbatterie ausgelegt. Ferner ist es vorteilhaft, die Energieversorgungseinheit als ein Netzgerät, ein Solargenerator etc. auszulegen.

Gemäß noch einer weiteren bevorzugten Weiterbildung der vorliegenden Erfindung ist die mindestens eine Umschalteinheit zur Umschaltung der mindestens einen Betriebsspannung, die der mindestens einen zu versorgenden Schaltungseinheit bereitgestellt wird, von einem ersten Betriebsspannungspegel auf mindestens einen zweiten Betriebsspannungspegel, durch einen Mikroprozessor bereitgestellt.

Gemäß noch einer weiteren bevorzugten Weiterbildung der vorliegenden Erfindung wird die mindestens eine Betriebsspannung, die der mindestens einen zu versorgenden Schaltungseinheit bereitgestellt wird, mittels der Umschalteinheit zwischen mindestens zwei Betriebsspannungspegeln umgeschaltet.

Gemäß noch einer weiteren bevorzugten Weiterbildung der vorliegenden Erfindung wird die mindestens eine Betriebsspannung, die der mindestens einen zu versorgenden Schaltungseinheit bereitgestellt wird, mittels der Umschalteinheit von dem ersten Betriebsspannungspegel auf den mindestens einen zweiten Betriebsspannungspegel durch einen asymptotischen Funktionsverlauf geändert. Weiterhin ist es zweckmäßig, dass die mindestens eine Betriebsspannung, die der mindestens einen zu versorgenden Schaltungseinheit bereitgestellt wird, mittels der Umschalteinheit von dem mindestens einen zweiten Betriebsspannungspegel auf den ersten Betriebsspannungspegel durch einen asymptotischen Funktionsverlauf geändert wird.

Hierbei ist es zweckmäßig, dass der asymptotische Funktionsverlauf als eine Exponentialfunktion ausgebildet ist.

Gemäß noch einer weiteren bevorzugten Weiterbildung der vorliegenden Erfindung wird die Energieversorgungsspannung, die von der Energieversorgungseinheit zur Versorgung der Steuereinheit mit elektrischer Energie bereitgestellt wird, mittels einer Erfassungshysterese durch die Erfassungseinheit erfasst.

Auf diese Weise ermöglichen es die Vorrichtung und das Verfahren der vorliegenden Erfindung, dass eine Verlustleistung in einer Steuereinheit, die zu versorgende Schaltungseinheiten mit einer Betriebsspannung und einem Betriebsstrom versorgt, verringert wird.

ZEICHNUNGEN

Ausführungsbeispiele sind in den Zeichnungen dargestellt und in der nachfolgenden Beschreibung näher erläutert.

In den Zeichnungen zeigen:

Fig. 1 ein Blockdiagramm der erfindungsgemäßen Vorrichtung zur Versorgung mindestens einer zu versorgenden Schaltungseinheit mit elektrischer Energie, indem der mindestens einen zu versorgenden Schaltungseinheit eine Betriebsspannung und ein Betriebsstrom bereitgestellt werden; und

Fig. 2(a) ein Verlauf der Energieversorgungsspannung, die von der Energieversorgungseinheit bereitgestellt wird, über der Zeit; und

Fig. 2(b) ein zu der Fig. 2(a) korrespondierender Zeitverlauf der Betriebsspannung, die der mindestens einen zu versorgenden Schaltungseinheit bereitgestellt wird.

In den Figuren bezeichnen gleiche Bezugszeichen gleiche oder funktionsgleiche Komponenten oder Schritte.

BESCHREIBUNG DER AUSFÜHRUNGSBEISPIELE

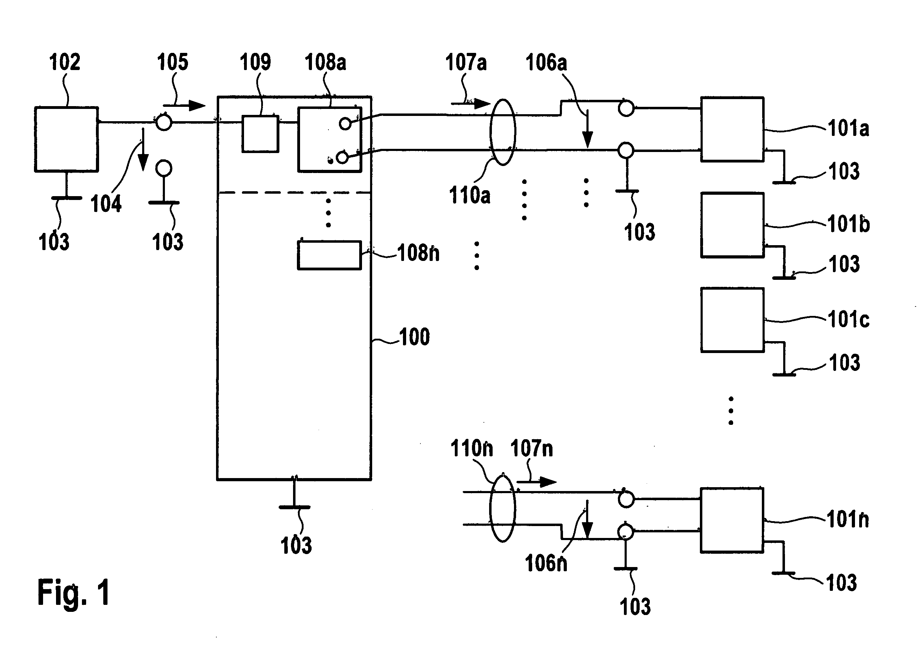

Fig. 1 zeigt ein Blockdiagramm einer Energieversorgungsvorrichtung zur Versorgung mindestens einer zu versorgenden Schaltungseinheit 101a-101n mit elektrischer Energie. Es sei darauf hingewiesen, dass eine beliebige Anzahl n (n = 1, ...) von zu versorgenden Schaltungseinheiten mit elektrischer Energie je nach einer Auslegung einer Steuereinheit 100 bereitgestellt werden kann. Die Steuereinheit 100 (bzw. das Steuergerät) stellt die zentrale Einheit beispielsweise in einer Fahrzeugelektrik dar.

Das grundlegende Prinzip der Erfindung besteht darin, die in der Steuereinheit 100 entstehende Verlustleistung auf ein Niveau zu drücken, derart, dass eine übermäßige Erwärmung der Steuereinheit 100 in Form von Joule'scher Wärme vermieden wird. Hierbei ist es wesentlich zu erkennen, dass die Verlustleistung durch eine Spannungsdifferenz zwischen einer Energieversorgungsspannung 104, die an die Steuereinheit 100 angelegt wird, und der entsprechenden Betriebsspannung 106a-106n, die der jeweiligen zu versorgenden Schaltungseinheit 101a-101n zugeordnet ist, multipliziert mit dem entsprechenden Betriebsstrom 107a-107n der entsprechenden zu versorgenden Schaltungseinheit 101a-101n gebildet wird.

Ohne Einschränkung der Allgemeinheit sind Spannungen, wie beispielsweise die Energieversorgungsspannung 104 und die jeweiligen Betriebsspannungen 106a-106n auf Masse 103 bezogen. Eine Energieversorgungseinheit 102, die beispielsweise als ein Netzgerät, ein Solargenerator oder eine Fahrzeugbatterie ausgebildet sein kann, liefert eine im Wesentlichen nicht konstante Energieversorgungsspannung 104 für die Steuereinheit 100. Zur Durchführung des erfindungsgemäßen Verfahrens enthält die Steuereinheit 100 eine Erfassungseinheit 109 zur Erfassung der von der Energieversorgungseinheit 102 bereitgestellten Energieversorgungsspannung 104. Obwohl dies in Fig. 1 nicht dargestellt ist, sei darauf hingewiesen, dass sowohl die Erfassungseinheit 109 als auch mindestens eine Umschalteinheit 108a-108n zur Umschaltung der mindestens einen Betriebsspannung 106a-106n auch extern von dem Steuergerät 100 angeordnet sein kann.

Die mindestens eine Umschalteinheit 108a-108n dient einer Umschaltung der mindestens einen Betriebsspannung 106a-106n, die der mindestens einen zu versorgenden Schaltungseinheit 101a-101n bereitgestellt wird, von einem ersten Betriebsspannungspegel 203 auf mindestens einen zweiten Betriebsspannungspegel 204 in Abhängigkeit von der erfassten Energieversorgungsspannung 104.

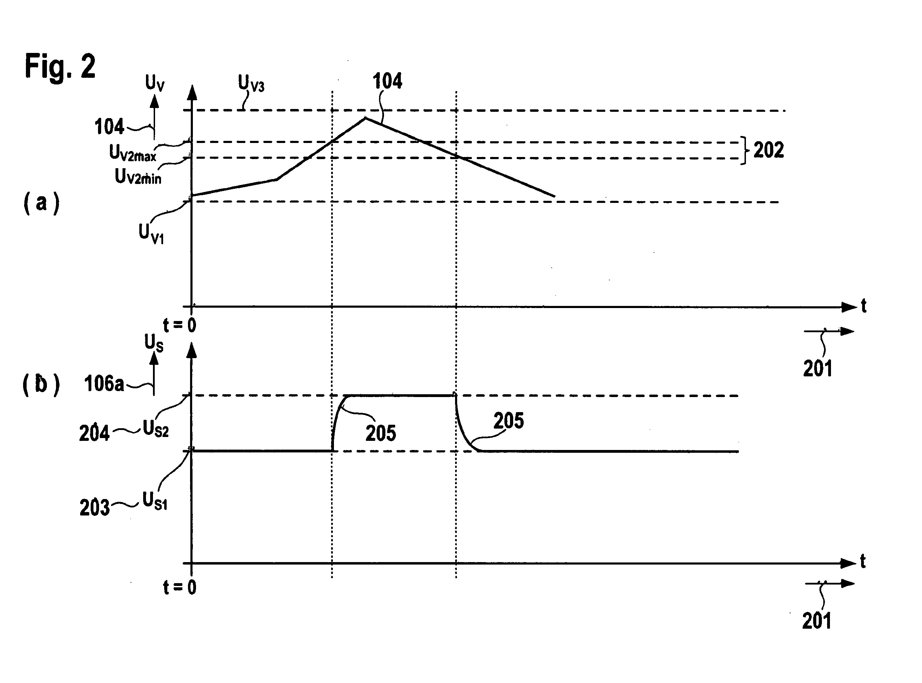

Das Verfahren zur Durchführung einer derartigen Umschaltung ist untenstehend unter Bezugnahme auf Fig. 2 beschrieben. Es sei darauf hingewiesen, dass jeder zu versorgenden Schaltungseinheit 101a-101n entweder eine entsprechende Umschalteinheit 108a-108n zugeordnet sein kann, oder dass eine Umschalteinheit 108a für sämtliche angeschlossenen elektrischen Schaltungseinheiten 101a-101n herangezogen wird. Hierbei können die Schaltungseinheiten 101a-101n einzeln oder in Gruppen entsprechenden Umschalteinheiten zugeordnet werden, wobei die Anzahl der Umschalteinheiten 108a-108n kleiner als die Anzahl der Schaltungseinheiten 101a-101n sein kann. Die jeweiligen zu versorgenden Schaltungseinheiten 101a-101n sind über entsprechende elektrische Verbindungseinheiten 110a-110n mit der Steuereinheit 100 bzw. der entsprechenden, in der Steuereinheit 100 bereitgestellten Umschalteinheit 108a-108n verbunden. Auf diese Weise werden den entsprechenden zu versorgenden Schaltungseinheiten 101a-101n entsprechende Betriebsspannungen 106a-106n zugeführt, die sich zudem voneinander unterscheiden können.

Die Fig. 2(a) und 2(b) dienen einer Erläuterung des erfindungsgemäßen Verfahrens zum Versorgen mindestens einer zu versorgenden Schaltungseinheit 101a-101n mit elektrischer Energie, wobei ein Umschalten der mindestens einen Betriebsspannung 106a-106n, die der mindestens einen zu versorgenden Schaltungseinheit 101a-101n bereitgestellt wird, von einem ersten Betriebsspannungspegel 203 auf mindestens einen zweiten Betriebsspannungspegel 204 (siehe Fig. 2(b)) in Abhängigkeit von der erfassten Energieversorgungsspannung 104 durchgeführt wird.

Wie in Fig. 2(a) gezeigt, variiert die von der Energieversorgungseinheit 102 bereitgestellte Energieversorgungsspannung 104 in weiten Bereichen. Dies ist in der Fahrzeugelektronik beispielsweise dann der Fall, wenn eine Fahrzeugbatterie aufgeladen ist, bzw. wenn unterschiedliche Lastzustände für die Fahrzeugbatterie vorhanden sind. Beispielsweise weist die Energieversorgungsspannung 104, die in der Fig. 2(a) mit $U_V$ bezeichnet und als Funktion der Zeit 201t aufgetragen ist, einen Anfangswert (t = 0) von 8,5 V auf. Aufgrund eines Ladeprozesses erhöht sich diese Spannung von 8,5 V auf einen Wert von nahezu 16 V, der durch die obere gestrichelte Linie dargestellt und mit $U_{V3}$ bezeichnet ist.

Die in der Steuereinheit 100 bereitgestellte Erfassungseinheit 109 (siehe Beschreibung in Bezugnahme auf Fig. 1, oben) erfasst nun die variierende Energieversorgungsspannung 104, wobei eine Schaltschwelle $U_{V2}$ mit einer Erfassungshysterese 202 definiert ist (mittlere gestrichelte Linien in Fig. 2(a)). Entsprechend einem Überschreiten bzw. Unterschreiten der durch die Erfassungshysterese 202 definierten Schaltschwelle wird nun erfindungsgemäß die Betriebsspannung 106a-106n einer entsprechenden zu versorgenden Schaltungseinheit 101a-101n umgeschaltet. Es sei darauf hingewiesen, dass in dem in Fig. 2(b) gezeigten Diagramm lediglich ein Verlauf einer Betriebsspannung 106a für eine entsprechende zu versorgende Schaltungseinheit 101a gezeigt ist. Fig. 2(b) zeigt ferner, dass für die Betriebsspannung 106a ($U_S$) zwei Betriebsspannungspegel definiert sind, d.h. ein erster Betriebsspannungspegel 203 ($U_{S1}$) und ein zweiter Betriebsspannungspegel 204 ($U_{S2}$). Auf diese Weise ergibt sich erfindungsgemäß die Möglichkeit, dass die entsprechende Umschalteinheit 108a die Betriebsspannung 106a bei einem Überschreiten des durch die Erfassungshysterese 202 definierten Schwellenpegels durch die Energieversorgungsspannung 104 von dem ersten Betriebsspannungspegel 203 auf den mindestens einen zweiten Betriebsspannungspegel 204 umschaltet. Das heißt, dass die Betriebsspannung 106a von dem ersten Betriebsspannungspegel 203 (durchgezogene Linie in Fig. 2(b)) auf den zweiten Betriebsspannungspegel 204 (gestrichelte Linie in Fig. 2(b)) umgeschaltet wird.

Im Folgenden wird das erfindungsgemäße Verfahren zum Versorgen mindestens einer zu versorgenden Schaltungseinheit 101a-101n mit elektrischer Energie detailliert beschrieben werden, wobei der mindestens einen zu versorgenden Schaltungseinheit 101a-101n eine variable Betriebsspannung 106a-106n und ein Betriebsstrom 107a-107n bereitgestellt werden. Zunächst ist die Betriebsspannung 106a (nachstehend wird das erfindungsgemäße Verfahren an Hand einer zu versorgenden Schaltungseinheit 101a erläutert werden) auf einen Wert $U_{S1}$ eingestellt, wenn die Energieversorgungsspannung 104 in einem Bereich zwischen $U_{V1}$ und $U_{V2max}$ liegt, gemäß nachstehender Gleichung (1).

$$U_{V1} < U_V < U_{V2max} \rightarrow U_S = U_{S1} \tag{1}$$

Steigt die Energieversorgungsspannung 104, d.h. $U_v$ an, dann wird die Betriebsspannung 106a, d.h. $U_S$ auf mindestens einen zweiten Betriebsspannungspegel 204, d.h. $U_{S2}$, eingestellt. Für den Fall, dass sich, wie untenstehend unter Bezugnahme auf die Gleichung (2) erläutert, die Energieversorgungsspannung 104 in einem Bereich zwischen $U_{V2max}$ und $U_{V3}$ befindet, erhält die Betriebsspannung 106 den Wert $U_{S2}$.

$$U_{V2max} < U_V < U_{V3} \rightarrow U_S = U_{S2} \tag{2}$$

Für die Beziehung zwischen dem ersten Betriebsspannungspegel 203 ($U_{S1}$) und dem mindestens einen zweiten Betriebsspannungspegel 204 ($U_{S2}$) gilt die folgende Beziehung (3).

$$U_{S1} < U_{S2} \tag{3}$$

Im Folgenden werden die Vorteile des erfindungsgemäßen Verfahrens zum Versorgen mindestens einer zu versorgenden Schaltungseinheit 101a-101n mit elektrischer Energie an Hand eines konkreten Zahlenbeispiels unter Bezugnahme auf die nachfolgenden Gleichungen (4) bis (13) detailliert erläutert.

In dem Beispiel wird die als eine Sensoreinheit ausgebildete zu versorgende Schaltungseinheit 101a mit einer Betriebsspannung 106a gemäß Gleichung (4) betrieben.

$$U_S = 8,5 \text{ V} \tag{4}$$

Mit Hilfe dieser Spannung wird in der Sensoreinheit einerseits ein Sendestrom erzeugt und andererseits eine Logik zur Auswertung der Signale gespeist. Die Betriebsspannung $U_S$ wird zur Versorgung der Logikeinheit der Sensoreinheit separat erneut geregelt. Der zulässige Spannungsbereich für die Sensoreinheit liegt beispielsweise in einem Bereich, wie er durch die folgende Beziehung (5) definiert ist.

$$8 \text{ V} < U_S < 11 \text{ V} \tag{5}$$

Für einen korrekten Betrieb der Sensoreinheit 101a wird beispielsweise ein Bereich der Energieversorgungsspannung 104 gefordert, der die folgende Beziehung (6) erfüllt.

$$9\,V < U_V < 16\,V \tag{6}$$

In dem hier beschriebenen Ausführungsbeispiel werden die entsprechenden Schaltspannungen gemäß den untenstehenden Definitionen (7) festgelegt.

$$U_{V1} = 9\,V;\ U_{V2min} = 13,5\,V;\ U_{V2max} = 14\,V;\ U_{S1} = 8,5\,V;\ U_{S2} = 10,5\,V \tag{7}$$

Das heißt, dass die zu versorgende Schaltungseinheit 101a (Sensoreinheit) in einem Bereich bis 14 V mit einer Betriebsspannung von $U_S = 8,5\,V$ versorgt wird, wie in untenstehenden Gleichungen (8) erläutert.

$$U_V < 14\,V \rightarrow U_S = 8,5\,V = U_{S1} \tag{8}$$

Die zu versorgende Schaltungseinheit 101a wird hingegen dann, wenn die Energieversorgungsspannung 104 einen Pegel von 14 V überschreitet, mit einer Betriebsspannung von 10,5 V versorgt, wie in untenstehender Gleichung (9) erläutert.

$$U_V > 14\,V \rightarrow U_S = 10,5\,V = U_{S2} \tag{9}$$

Die gesamte, maximale Verlustleistung ergibt sich aus der Differenz zwischen der maximalen Energieversorgungsspannung (16 V) und der Sensorbetriebsspannung (8,5 V), multipliziert mit dem entsprechenden Betriebsstrom 107a des Sensors, der gemäß untenstehender Gleichung (10) zu 20 mA angenommen wird ($I_S$). Die Sensorbetriebsspannung, mit welcher die Sensoreinheit nominal betrieben wird, ist untenstehend mit $U_{S,nominal}$ bezeichnet. Wie untenstehender Gleichung (10) aufgeführt, bezeichnet N die Anzahl der mit der Steuereinheit 100 zu versorgenden Sensoreinheiten (zu versorgenden Schaltungseinheiten) 101a-101n.

$$I_S = 20\,mA;\ U_{V,max} = 16\,V;\ U_{S,nominal} = 8,5\,V;\ N = 10 \tag{10}$$

Für die folgenden Berechnungen, die untenstehend unter Bezugnahme auf die Gleichungen (11) bis (13) aufgeführt sind, ist angenommen, dass die entsprechenden Betriebsströme 107a-107n der zu versorgenden Schaltungseinheiten 101a-101n konstant auch bei einem Umschalten von dem ersten Betriebsspannungspegel 203 auf den zweiten Betriebsspannungspegel 204 (siehe Fig. 2(b)) bleiben. Wie untenstehend unter Bezugnahme auf die Gleichung (11) erläutert, beträgt die Verlustleistung mit den in der Gleichung (10) angegebenen Daten 1,5 W.

$$P_{Verlust} = (16\,V - 8,5\,V) \cdot 20\,mA \cdot N = 1,5\,W \tag{11}$$

Die unter Bezugnahme auf obenstehende Gleichung (11) berechnete Verlustleistung $P_{Verlust}$ ergibt sich dann, wenn das erfindungsgemäße Verfahren nicht eingesetzt wird. Dadurch, dass durch das erfindungsgemäße Verfahren die Betriebsspannung 106a ($U_S$), die der zu versorgenden Schaltungseinheit 101a zugeführt wird, auf 10,5 V erhöht wird, siehe untenstehende Gleichung (12), ergibt sich eine Verringerung der gesamten in der Steuereinheit 100 umzusetzenden Verlustleistung.

$$U_{S2} = 10,5 \text{ V} \qquad\qquad (12)$$

Der erwähnte Gewinn $P_{Gewinn}$ ergibt sich aus untenstehender Gleichung (13) unter der Annahme, dass die Spannungsdifferenz zwischen der maximalen Energieversorgungsspannung 104 ($U_{S,max}$) und der aktuellen Betriebsspannung 106, mit der die zu versorgende Schaltungseinheit 101a versorgt wird, um 2 V abnimmt.

$$P_{Gewinn} = (10,5 \text{ V} - 8,5 \text{ V}) \cdot 20 \text{ mA} \cdot N = 0,4 \text{ W} \qquad\qquad (13)$$

Wie unter Bezugnahme auf Fig. 2(b) gezeigt, erfolgt das Umschalten von dem ersten Betriebsspannungspegel 203 ($U_{S1}$) auf den mindestens einen zweiten Betriebsspannungspegel 204 ($U_{S2}$) nicht abrupt, sondern vermöge eines asymptotischen Funktionsverlaufs 205. Weiterhin erfolgt ein Umschalten mittels der Umschalteinheit 108a von dem mindestens einen zweiten Betriebsspannungspegel 204 ($U_{S2}$) auf den ersten Betriebsspannungspegel 203 ($U_{S1}$) durch einen asymptotischen Funktionsverlauf 205. Vorzugsweise ist der asymptotische Funktionsverlauf 205 als eine Exponentialfunktion ausgebildet.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten beschränkt.

## Patentansprüche

1. Vorrichtung zur Versorgung mindestens einer zu versorgenden Schaltungseinheit (101a-101n) mit elektrischer Energie, indem der mindestens einen zu versorgenden Schaltungseinheit (101a-101n) eine Betriebsspannung (106a-106n) und ein Betriebsstrom (107a-107n) bereitgestellt werden, mit:

   a) einer Steuereinheit (100) zur Ansteuerung der mindestens einen zu versorgenden Schaltungseinheit (101a-101n);
   b) einer Energieversorgungseinheit (102) zur Versorgung der Steuereinheit (100) mit elektrischer Energie, indem der Steuereinheit (100) eine Energieversorgungsspannung (104) und ein Energieversorgungsstrom (105) bereitgestellt werden aus denen die Steuereinheit eine Betriebsspannung (106a-106n) und einen Betriebsstrom (107a-107n) erzeugt; und
   c) mindestens einer elektrischen Verbindungseinheit (110a-110n) zur elektrischen Verbindung der mindestens einen zu versorgenden Schaltungseinheit (101a-101n) mit der Steuereinheit (100),
   **dadurch gekennzeichnet, dass** die Steuereinheit (100) ferner aufweist:
   d) eine Erfassungseinheit (109) zur Erfassung der von der Energieversorgungseinheit (102) bereitgestellten Energieversorgungsspannung (104); und
   e) mindestens eine Umschalteinheit (108a-108n) zur Umschaltung der mindestens einen Betriebsspannung (106a-106n), die der mindestens einen zu versorgenden Schaltungseinheit (101a-101n) bereitgestellt wird, von einem ersten Betriebsspannungspegel (203) auf mindestens einen zweiten Betriebsspannungspegel (204) in Abhängigkeit von der erfassten Energieversorgungsspannung (104), wobei der zweite Betriebsspannungspegel (204) größer als der erste Betriebsspannungspegel (203) ist, und wobei eine Spannungsdifferenz zwischen der Energieversorgungsspannung (104) und der Betriebsspannung (106a-106n) verringert wird.

2. Vorrichtung nach Anspruch 1, **dadurch gekennzeichnet, dass** die mindestens eine zu versorgende Schaltungseinheit (101a-101n) als eine Sensoreinheit ausgebildet ist.

3. Vorrichtung nach Anspruch 1, **dadurch gekennzeichnet, dass** die Energieversorgungseinheit (102) zur Versorgung der Steuereinheit (100) mit elektrischer Energie, indem der Energieversorgungseinheit (102) eine Energieversorgungsspannung (104) und ein Energieversorgungsstrom (105) bereitgestellt werden, als eine Fahrzeugbatterie ausgelegt ist.

4. Vorrichtung nach Anspruch 1, **dadurch gekennzeichnet, dass** die mindestens eine Umschalteinheit (108a-108n) zur Umschaltung der mindestens einen Betriebsspannung (106a-106n), die der mindestens eine zu versorgenden Schaltungseinheit (101a-101n) bereitgestellt werden, von einem ersten Betriebsspannungspegel (203) auf mindestens einen zweiten Betriebsspannungspegel (204) durch einen Mikroprozessor bereitgestellt ist.

5. Verfahren zum Versorgen mindestens einer zu versorgenden Schaltungseinheit (101a-101n) mit elektrischer Energie, indem der mindestens einen zu versorgenden Schaltungseinheit (101a-101n) eine Betriebsspannung (106a-106n) und ein Betriebsstrom (107a-107n) bereitgestellt werden, mit den folgenden Schritten:

a) Versorgen einer Steuereinheit (100) mit elektrischer Energie mittels einer Energieversorgungseinheit (102), indem der Steuereinheit (100) eine Energieversorgungsspannung (104) und ein Energieversorgungsstrom (105) bereitgestellt werden aus denen die Steuereinheit eine Betriebsspannung (106a-106n) und einen Betriebsstrom (107a-107n) erzeugt; und
b) Ansteuern der mindestens einen zu versorgenden Schaltungseinheit (101a-101n) mittels der Steuereinheit (100), wobei die mindestens eine zu versorgende Schaltungseinheit (101a-101n) mit der Steuereinheit (100) über mindestens eine elektrische Verbindungseinheit (110a-110n) elektrisch verbunden wird, **dadurch gekennzeichnet, dass** das Verfahren ferner die folgenden Schritte aufweist:
c) Erfassen der von der Energieversorgungseinheit (102) bereitgestellten Energieversorgungsspannung (104) mittels einer Erfassungseinheit (109); und
d) Umschalten der mindestens einen Betriebsspannung (106a-106n), die der mindestens einen zu versorgenden Schaltungselnheit (101a-101n) bereitgestellt wird, von einem ersten Betriebsspannungspegel (203) auf mindestens einen zweiten Betriebsspannungspegel (204) in Abhängigkeit von der erfassten Energieversorgungsspannung (104) mittels mindestens einer Umschalteinheit (108a-108n), wobei der zweite Betriebsspannungspegel (204) größer als der erste Betriebsspannungspegel (203) ist, und wobei eine Spannungsdifferenz zwischen der Energieversorgungsspannung (104) und der Betriebsspannung (106a-106n) verringert wird.

6. Verfahren nach Anspruch 5, **dadurch gekennzeichnet, dass** die mindestens eine Betriebsspannung (106a-106n), die der mindestens einen zu versorgenden Schaltungseinheit (101a-101n) bereitgestellt wird, mittels der Umschalteinheit (108a-108n) zwischen mindestens zwei Betriebsspannungspegeln (203, 204) umgeschaltet wird.

7. Verfahren nach Anspruch 5 oder 6, **dadurch gekennzeichnet, dass** die mindestens eine Betriebsspannung (106a-106n), die der mindestens einen zu versorgenden Schattungseinheit (101a-101n) bereitgestellt wird, mittels der Umschalteinheit (108a-108n) von dem ersten Betriebsspannungspegel (203) auf den mindestens einen zweiten Betriebsspannungspegel (204) durch einen asymptotischen Funktionsverlauf (205) geändert wird.

8. Verfahren nach Anspruch 5 oder 6, **dadurch gekennzeichnet, dass** die mindestens eine Betriebsspannung (106a-106n), die der mindestens einen zu versorgenden Schaltungseinheit (101a-101n) bereitgestellt wird, mittels der Umschalteinheit (108a-108n) von dem mindestens einen zweiten Betriebsspannungspegel (204) auf den ersten Betriebsspannungspegel (203) durch einen asymptotischen Funktionsverlauf (205) geändert wird.

9. Verfahren nach Anspruch 7 oder 8, **dadurch gekennzeichnet, dass** der asymptotische Funktionsverlauf (205) als eine Exponentialfunktion ausgebildet ist.

10. Verfahren nach Anspruch 5, **dadurch gekennzeichnet, dass** die Energieversorgungsspannung (104), die der Steuereinheit (102) von der Energieversorgungseinheit (102) bereitgestellt wird, durch die Erfassungseinheit (109) mittels einer Erfassungshysterese (202) erfasst wird.

**Claims**

1. Apparatus for supplying electrical energy to at least one circuit unit (101a-101n) to be supplied by providing the at least one circuit unit (101a-101n) to be supplied with an operating voltage (106a-106n) and an operating current (107a-107n), having:

a) a control unit (100) for controlling the at least one circuit unit (101a-101n) to be supplied;
b) an energy supply unit (102) for supplying electrical energy to the control unit (100) by providing the control unit (100) with an energy supply voltage (104) and an energy supply current (105) from which the control unit generates an operating voltage (106a-106n) and an operating current (107a-107n); and
c) at least one electrical connecting unit (110a-110n) for electrically connecting the at least one circuit unit (101a-101n) to be supplied to the control unit (100),
**characterized in that** the control unit (100) also has:

d) a detection unit (109) for detecting the energy supply voltage (104) provided by the energy supply unit (102); and

e) at least one changeover unit (108a-108n) for changing over the at least one operating voltage (106a-106n), which is provided to the at least one circuit unit (101a-101n) to be supplied, from a first operating voltage level (203) to at least one second operating voltage level (204) on the basis of the detected energy supply voltage (104), the second operating voltage level (204) being greater than the first operating voltage level (203), and a voltage difference between the energy supply voltage (104) and the operating voltage (106a-106n) being reduced.

2. Apparatus according to Claim 1, **characterized in that** the at least one circuit unit (101a-101n) to be supplied is in the form of a sensor unit.

3. Apparatus according to Claim 1, **characterized in that** the energy supply unit (102) for supplying electrical energy to the control unit (100) by providing the control unit (100) with an energy supply voltage (104) and an energy supply current (105) is in the form of a vehicle battery.

4. Apparatus according to Claim 1, **characterized in that** the at least one changeover unit (108a-108n) for changing over the at least one operating voltage (106a-106n), which is provided to the at least one circuit unit (101a-101n) to be supplied, from a first operating voltage level (203) to at least one second operating voltage level (204) is provided by a microprocessor.

5. Method for supplying electrical energy to at least one circuit unit (101a-101n) to be supplied by providing the at least one circuit unit (101a-101n) to be supplied with an operating voltage (106a-106n) and an operating current (107a-107n), having the following steps of:

a) using an energy supply unit (102) to supply electrical energy to a control unit (100) by providing the control unit (100) with an energy supply voltage (104) and an energy supply current (105) from which the control unit generates an operating voltage (106a-106n) and an operating current (107a-107n), and

b) using the control unit (100) to control the at least one circuit unit (101a-101n) to be supplied, the at least one circuit unit (101a-101n) to be supplied being electrically connected to the control unit (100) via at least one electrical connecting unit (110a-110n),

**characterized in that** the method also has the following steps of:

c) using a detection unit (109) to detect the energy supply voltage (104) provided by the energy supply unit (102); and

d) using at least one changeover unit (108a-108n) to change over the at least one operating voltage (106a-106n), which is provided to the at least one circuit unit (101a-101n) to be supplied, from a first operating voltage level (203) to at least one second operating voltage level (204) on the basis of the detected energy supply voltage (104), the second operating voltage level (204) being greater than the first operating voltage level (203), and a voltage difference between the energy supply voltage (104) and the operating voltage (106a-106n) being reduced.

6. Method according to Claim 5, **characterized in that** the at least one operating voltage (106a-106n), which is provided to the at least one circuit unit (101a-101n) to be supplied, is changed over between at least two operating voltage levels (203, 204) using the changeover unit (108a-108n).

7. Method according to Claim 5 or 6, **characterized in that** the at least one operating voltage (106a-106n), which is provided to the at least one circuit unit (101a-101n) to be supplied, is changed from the first operating voltage level (203) to the at least one second operating voltage level (204) using the changeover unit (108a-108n) by means of an asymptotic function profile (205).

8. Method according to Claim 5 or 6, **characterized in that** the at least one operating voltage (106a-106n), which is provided to the at least one circuit unit (101a-101n) to be supplied, is changed from the at least one second operating voltage level (204) to the first operating voltage level (203) using the changeover unit (108a-108n) by means of an asymptotic function profile (205).

9. Method according to Claim 7 or 8, **characterized in that** the asymptotic function profile (205) is in the form of an exponential function.

**10.** Method according to Claim 5, **characterized in that** the energy supply voltage (104), which is provided to the control unit (100) by the energy supply unit (102), is detected by the detection unit (109) by means of detection hysteresis (202).

## Revendications

**1.** Dispositif pour alimenter au moins une unité de commutation (101a - 101n) à alimenter en énergie électrique, en fournissant une tension de service (106a - 106n) et un courant de service (107a - 107n) à l'au moins une unité de commutation (101a - 101n) à alimenter, comprenant :

a) une unité de commande (100) pour commander l'au moins une unité de commutation (101a - 101n) à alimenter ;
b) une unité d'alimentation en énergie (102) pour alimenter l'unité de commande (100) en énergie électrique en fournissant à l'unité de commande (100) une tension d'alimentation en énergie (104) et un courant d'alimentation en énergie (105) à partir desquels l'unité de commande génère une tension de service (106a - 106n) et un courant de service (107a - 107n) ; et
c) au moins une unité de liaison électrique (110a - 110n) pour relier électriquement l'au moins une unité de commutation (101a - 101n) à alimenter avec l'unité de commande (100),
**caractérisé en ce que** l'unité de commande (100) présente en outre :
d) une unité de détection (109) pour détecter la tension d'alimentation en énergie (104) fournie par l'unité d'alimentation en énergie (102) ; et
e) au moins une unité de permutation (108a - 108n) pour permuter l'au moins une tension de service (106a - 106n), qui est fournie à l'au moins une unité de commutation (101a - 101n) à alimenter, d'un premier niveau de tension de service (203) à au moins un deuxième niveau de tension de service (204) en fonction de la tension d'alimentation en énergie (104) détectée, le deuxième niveau de tension de service (204) étant supérieur au premier niveau de tension de service (203) et une différence de tension entre la tension d'alimentation en énergie (104) et la tension de service (106a - 106n) étant réduite.

**2.** Dispositif selon la revendication 1, **caractérisé en ce que** l'au moins une unité de commutation (101a - 101n) à alimenter est réalisée sous la forme d'une unité de détection.

**3.** Dispositif selon la revendication 1, **caractérisé en ce que** l'unité d'alimentation en énergie (102) destinée à alimenter l'unité de commande (100) en énergie électrique, en fournissant à l'unité de commande (100) une tension d'alimentation en énergie (104) et un courant d'alimentation en énergie (105), est conçue sous la forme d'une batterie de véhicule.

**4.** Dispositif selon la revendication 1, **caractérisé en ce que** l'au moins une unité de permutation (108a - 108n) destinée à permuter l'au moins une tension de service (106a - 106n), laquelle est fournie à l'au moins une unité de commutation (101a - 101n) à alimenter, est fournie d'un premier niveau de tension de service (203) à un deuxième niveau de tension de service (204) par un microprocesseur.

**5.** Procédé pour alimenter au moins une unité de commutation (101a - 101n) à alimenter en énergie électrique, en fournissant une tension de service (106a - 106n) et un courant de service (107a - 107n) à l'au moins une unité de commutation (101a - 101n) à alimenter, comprenant les étapes suivantes :

a) alimentation d'une unité de commande (100) en énergie électrique au moyen d'une unité d'alimentation en énergie (102) en fournissant à l'unité de commande (100) une tension d'alimentation en énergie (104) et un courant d'alimentation en énergie (105) à partir desquels l'unité de commande génère une tension de service (106a - 106n) et un courant de service (107a - 107n) ; et
b) commande de l'au moins une unité de commutation (101a - 101n) à alimenter au moyen de l'unité de commande (100), l'au moins une unité de commutation (101a - 101n) à alimenter étant reliée électriquement avec l'unité de commande (100) par le biais d'au moins une unité de liaison électrique (110a - 101n), **caractérisé en ce que** le procédé présente en outre les étapes suivantes :
c) détection de la tension d'alimentation en énergie (104) fournie par l'unité d'alimentation en énergie (102) au moyen d'une unité de détection (109) ; et
d) permutation de l'au moins une tension de service (106a - 106n), qui est fournie à l'au moins une unité de commutation (101a - 101n) à alimenter, d'un premier niveau de tension de service (203) à au moins un deuxième niveau de tension de service (204) en fonction de la tension d'alimentation en énergie (104) détectée au moyen d'au moins une unité de permutation (108a - 108n), le deuxième niveau de tension de service (204) étant supérieur au premier niveau de tension de service (203) et une différence de tension entre la tension d'alimentation en énergie (104) et la tension de service (106a - 106n) étant réduite.

6.  Procédé selon la revendication 5, **caractérisé en ce que** l'au moins une tension de service (106a - 106n), qui est fournie à l'au moins une unité de commutation (101a - 101n) à alimenter, est permutée au moyen de l'unité de permutation (108a - 108n) entre au moins deux niveaux de tension de service (203, 204).

7.  Procédé selon la revendication 5 ou 6, **caractérisé en ce que** l'au moins une tension de service (106a - 106n), qui est fournie à l'au moins une unité de commutation (101a - 101n) à alimenter, est modifiée au moyen de l'unité de permutation (108a - 108n) du premier niveau de tension de service (203) à l'au moins un deuxième niveau de tension de service (204) par une courbe de fonction asymptotique (205).

8.  Procédé selon la revendication 5 ou 6, **caractérisé en ce que** l'au moins une tension de service (106a - 106n), qui est fournie à l'au moins une unité de commutation (101a - 101n) à alimenter, est modifiée au moyen de l'unité de permutation (108a - 108n) de l'au moins un deuxième niveau de tension de service (204) au premier niveau de tension de service (203) par une courbe de fonction asymptotique (205).

9.  Procédé selon la revendication 7 ou 8, **caractérisé en ce que** la courbe de fonction asymptotique (205) est réalisée sous la forme d'une fonction exponentielle.

10. Procédé selon la revendication 5, **caractérisé en ce que** la tension d'alimentation en énergie (104), qui est fournie à l'unité de commande (100) par l'unité d'alimentation en énergie (102), est détectée par l'unité de détection (109) au moyen d'une hystérésis de détection (202).

**Fig. 1**

EP 1 733 925 B1

Fig. 2

(a)

$U_V$

104

$U_{V3}$

$U_{V2max}$
$U_{V2min}$

$U_{V1}$

104

202

t

201

t = 0

(b)

$U_S$

106a

204 — $U_{S2}$

203 — $U_{S1}$

205

205

t

201

t = 0

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030030324 A1